# EUROPEAN PATENT SPECIFICATION

(11) **EP 2 311 913 B1**
(45) Date of publication and mention of the grant of the patent: **06.04.2016**
(21) Application number: 09773566.6
(22) Date of filing: 03.07.2009
(51) Int. Cl.: C08L 97/00, B29C 43/02, C08K 5/092, C09J 197/00, B29K 35/00

(54) **COMPOSITION CURED BY APPLYING HEAT/PRESSURE THERETO**
DURCH ANWENDUNG VON HITZE/DRUCK GEHÄRTETE ZUSAMMENSETZUNG
COMPOSITION DURCIE PAR APPLICATION DE CHALEUR/PRESSION À CELLE-CI

(30) Priority: 03.07.2008 JP 2008174290
(43) Date of publication of application: 20.04.2011
(73) Proprietor: Kyoto University, Sakyo-ku Kyoto-shi Kyoto 606-8501 (JP)
(72) Inventor: UMEMURA, Kenji, Uji-shi Kyoto 611-0011 (JP)
(74) Representative: Dannenberger, Oliver Andre
(86) International application number: PCT/JP2009/062182
(87) International publication number: WO 2010/001988

(56) References cited:
- WO-A1-2006/092330
- WO-A1-2009/001625
- JP-A- 1 104 620
- JP-A- 6 154 938
- JP-A- 60 141 759
- JP-A- S60 141 759
- Gordon Guozhong Xu ET AL: "Comparison of the Kraft Paper Crosslinked by Polymeric Carboxylic Acids of Large and Small Molecular Sizes: Dry and Wet Performance", , 1 January 1999 (1999-01-01), XP055072299, Retrieved from the Internet: URL:http://onlinelibrary.wiley.com/store/1 0.1002/(SICI)1097-4628(19991024)74:4<907:: AID-APP17>3.0.CO;2-9/asset/17_ftp.pdf?v=1& t=hjfofyqg&s=b4a29fd3fdce890ec8dc134dc558b 6c29b951725 [retrieved on 2013-07-22]

## Description

### [TECHNICAL FIELD]

The present invention relates to a composition which can be used as a raw material of a formed body (a cured body such as a molding and a particleboard) and an adhesive and does not require a fossil resource, a formed body made of the composition, and a method of producing a formed body.

### [BACKGROUND ART]

In order to prevent global warming and to save a fossil resource, demands for a so-called biomass material made of an organism-derived organic resource have recently been increased in place of a plastic made of petroleum. For example, Patent Document 1 discloses a method for producing a molding made of a woody material, in which a woody material containing a fluidization accelerator added therein is brought into contact with steam and the woody material is allowed to exhibit fluidity by passing through the respective steps of drying, applying heat/pressure, and then the woody material having exhibited fluidity is allowed to conform along a die surface to obtain a molding having a plastic-like surface. According to the method of Patent Document 1, it is possible to produce a molding made of a woody material, and to decrease energy consumed in the step of bringing the woody material into contact with steam by lowering a temperature of steam to be brought into contact with the woody material. Also, the method can improve the fluidity of the woody material by lowering a fluidization initiation temperature in the case of applying heat/pressure to the woody material, thus can form the woody material into more complicated shape.

### [PRIOR ART DOCUMENTS]

### [PATENT DOCUMENTS]

Patent Document 1: Japanese Laid-Open Patent Publication No. 2007-261159

However, the method of Patent Document 1 has a problem that the step is complicated, and a problem that a facility for supplying steam and a facility for drying are required, resulting in high costs since the step of bringing a woody material containing a fluidization accelerator added therein into contact with steam and the drying step are essentially required. There is also a problem that the method is not preferred from the viewpoint of an environmental problem since energy is required for supply of steam and drying. Further, JP60141753 discloses molded articles from cellulosic material and maleic anhydride.

### [SUMMARY OF THE INVENTION]

### [Problems to be Solved by the Invention]

Thus, an object of the present invention is to provide a composition which can produce a biomass material by more simple steps and facilities with low energy, an environmentally friendly plastic-like formed body (such as a molding) to be produced from the composition, and a method for producing the same.

### [Means for Solving the Problems]

The present inventor has intensively studied so as to solve the problems described above, and found that a composition containing a plant-derived material in the form of powder or small pieces, and a polycarboxylic acid is cured only by applying heat/pressure steps to give a plastic-like formed body and a woody formed body. Thus, the present invention has been completed.

The present invention provides a composition cured by applying heat/pressure thereto, including (a) a plant-derived material in the form of powder or small pieces and (b) a polycarboxylic acid as main components. The polycarboxylic acid may be in the form of powder, and in that case a weight ratio of the component (a) to the component (b) is preferably 0.7-4.0:1.0.

The composition according to the present invention does not requires a fossil resource and is therefore environmentally friendly, and also can easily form a biomass formed body since it is cured only by applying heat/pressure. The composition can also be used as an adhesive raw material. Since the step of performing a steam treatment is not required, the production process is simple and the formed body can be produced with low energy. Furthermore, when a powdery polycarboxylic acid is used, the composition is solid and is therefore easily handled, and is also excellent in stability during storage. If it is easy to uniformly mix with a plant-derived material when the polycarboxylic acid is in the form of a liquid (for example, in case the plant-derived material is in the form of small pieces), polycarboxylic acid may be allowed to coexist with the plant-derived material after dissolving in a solvent such as water.

The present inventor has continuously studied furthermore, and found that there is a high possibility that the above composition is cured by an esterification reaction of saccharides in the plant-derived material with the polycarboxylic acid through applying heat/pressure. Based on this finding, he has studied about saccharides as an additive for acceleration of curing, and succeeded in acceleration of curing by adding a saccharide having a low molecular weight such as sucrose, or a polysaccharide such as dextrin.

Therefore, the composition according to the present invention may further contain a saccharide (c). In the case, a weight ratio of the component (b) to the component (c) is preferably 1.0:0.1-5.0. In particular, when the plant-derived material is not in the form of a powder but in the form of small pieces, the composition may not be easily cured in the case of using only a polycarboxylic acid and the formed body obtained by curing may become embrittle. However, the composition containing a saccharide added therein can be easily cured and a rigid formed body can be obtained even when the plant-derived material is in the form of small pieces.

Furthermore, according to the present invention, a formed body having a sufficient strength can be produced by the same step as that of a conventional method of producing a particleboard. Namely, the particleboard is usually produced by spraying an adhesive on small wood pieces, followed by hot press forming. However, a board can be produced by using a solution containing a polycarboxylic acid (and a saccharide) in place of the adhesive, and spraying the solution on small wood pieces, followed by forming and further applying heat/pressure thereto.

In order to produce a board having a sufficient strength, it is preferred to use a saccharide in combination. When saccharide (c) already exists in the plant-derived material, in addition to a holocellulose component (cellulose and hemicellulose), for example, when bagasse (residue of sugarcane after squeezing) is used as the plant-derived material, a board having a sufficient strength can be produced by a solution containing only a polycarboxylic acid.

### [Effects of the Invention]

According to the present invention, since there is no need to use a fossil resource, a plastic-like formed body and a woody formed body can be obtained without causing an environmental burden. Also, there is no need to use a formaldehyde-based material which may cause sick house syndrome, thus ensuring high safety to the human body. Also, a formed body (a cured body such as a molding and a particleboard) can be produced simply at low costs.

### [BRIEF DESCRIPTION OF THE DRAWINGS]

Fig. 1 is a chart showing the results of thermal analysis of a mixture (weight ratio 2:1) of an acacia bark powder and a citric acid powder.

### [MODE FOR CARRYING OUT THE INVENTION]

In the present invention, the plant-derived material means those obtained from xylem, bark, seeds and leaves of trees and plants, and may be a plant powder (for example, bark powder) which is available in a market, or chips obtained by grinding a recycled material. It may also be a material derived from one kind of plant, or may be a mixture of materials derived from plural kinds of plants. Preferably, those obtained by grinding trees into a powder or small pieces are used. Also, a product processed once from a plant raw material, such as a filter paper can be used as a plant-derived material. In this case, it is preferred to use in combination with those obtained by grinding trees into a powder or small pieces, in place of using alone. The plant-derived material in the present invention may be in the form of a powder (including granules), or in the form of small pieces (including fibers). However, when the plant-derived material is too large, curing requires longer time, higher temperature and higher pressure, and also the strength of the obtained cured body becomes insufficient. Therefore, when the plant-derived material is mixed with a powdery polycarboxylic acid and is pressurized, it is preferred that a maximum length is controlled to 10 mm or less, and a thickness is controlled to 1 mm or less. An example of preferred plant-derived material includes small pieces which passed through a 30 mesh sieve and a powder which passed through a 60 mesh sieve. On the other hand, when the plant-derived material is mixed with a solution of polycarboxylic acid (and saccharide) and is pressurized, it is possible to cure small pieces having a larger size. For example, it is possible to sufficiently cure a plant-derived material which is in the form of small pieces having a maximum length 50 mm or less and a thickness of 10 mm or less.

It is possible to use, as the polycarboxylic acid, a polycarboxylic acid which is solid at normal temperature. Preferably, the polycarboxylic acid is selected from the group consisting of citric acid, itaconic acid and malic acid.

When the powdery polycarboxylic acid is used, it is preferred to use a polycarboxylic acid powder having a particle size, which passed through a 60 mesh sieve.

When the saccharide (c) is not added, the content of the polycarboxylic acid in the composition is preferably about 10% by weight or more. When the content is less than 10% by weight, it becomes difficult to cure. Since it is considered that excess polycarboxylic acid to form a cured body remains or undergoes decomposition, the content of the polycarboxylic acid is preferably 55% by weight or less. In more preferable composition, the content of the polycarboxylic acid is from 15% by weight to 50% by weight. When the polycarboxylic acid is in the form of a powder, the content of the polycarboxylic acid is particularly preferably from 20 to 40% by weight.

When the saccharide (c) is added, the content of the polycarboxylic acid in the composition is preferably 7% by weight or more and 40% by weight or less. More preferably, the content of the polycarboxylic acid is from 10% by weight to 30% by weight.

In the present invention, the saccharide (c) means at least one selected from the group consisting of monosaccharides, oligosaccharides and polysaccharides.

Examples of monosaccharides include fructose, ribose, arabinose, rhamnose, xylulose and deoxyribose. Examples of oligosaccharides include disaccharides such as maltose, trehalose and turanose; fructo oligosaccharide, galacto oligosaccharide, mannan oligosaccharide and stachyose. Examples of polysaccharides include starch, agarose, alginic acid, glucomannan, inulin, chitin, chitosan, hyaluronic acid and glycogen. Cellulose is polysaccharide which is contained in most plant-derived materials. When the content of cellulose in the plant-derived material is low, cellulose may be further added as the saccharide.

Examples of particularly preferable saccharides include sucrose, xylose and dextrin.

When the saccharide (c) is not added, the total amount of the components (a) and (b) preferably accounts for 70% by weight or more, more preferably 80% by weight or more, and particularly preferably 90% by weight or more, of the entire amount of the composition. When the saccharide (c) is added, the total amount of the components (a), (b) and (c) preferably accounts for 70% by weight or more, more preferably 80% by weight or more, and particularly preferably 90% by weight or more, of the entire amount of the composition.

It is preferred that a weight ratio of the plant-derived material to the polycarboxylic acid in the composition according to the present invention is preferably within a range from 0.7:1.0 to 9.5:1.0. When the weight ratio deviates from the above range, it becomes difficult to cure and, even when curing can be performed, the strength decreases. More preferably, the weight ratio of the plant-derived material to the polycarboxylic acid is from 1.0:1.0 to 8.0:1.0. When the polycarboxylic acid is added in the form of a powder, the weight ratio of the plant-derived material to the polycarboxylic acid is more preferably within a range from 1.0:1.0 to 5.0:1.0.

When the saccharide (c) is added, the weight ratio of the component (b) to the component (c) is preferably from 1.0:0.1 to 1.0:5.0. More preferably, the weight ratio of the component (b) to the component (c) is from 1.0:0.5 to 1.0:4.0.

When the saccharide (c) is added, it is preferred that the total weight of the components (b) and (c) does not exceed the weight of the component (a).

The above composition is useful as a raw material of a forming composition (such as a molding composition) and an adhesive for wood. In order to produce a molding from the molding composition, the composition may be charged in a die, heated within a range from 160°C to 250°C and then applied pressure within a range from 5 kgf/cm² to 70 kgf/cm² (from about 0.5 MPa to 7 MPa). In order to produce a plywood using the above composition, the composition may be interposed between veneer sheets for plywood, heated within a range from 160°C to 250°C and then applied pressure within a range from 5 kgf/cm² to 30 kgf/cm² (from about 0.5 MPa to 3 MPa). The heating temperature can be appropriately controlled and is suitably from 180°C to 220°C. The pressure can be appropriately controlled. However, when the above composition is used as a molding composition and a molding is produced, the pressure is particularly preferably from 30 to 50 kgf/cm² (from about 3 MPa to 5 MPa). When the above composition is used as an adhesive and a plywood is produced, the pressure is particularly preferably from 10 to 20 kgf/cm² (from about 1 MPa to 2 MPa).

When a formed body such as a particleboard is produced by the present invention, a solution containing the component (b) may be added to a plant-derived material (a) in the form of small pieces, followed by applying heat/pressure, or a solution containing the components (b) and (c) simultaneously or separately may be added, followed by applying heat/pressure. In this case, when the component (c) is not added, it is preferred to add the above solution so that a weight ratio of the component (a) to the component (b) existing in the above solution becomes within a range from 2.0:1.0 to 15.0:1.0 (more preferably from 4.0:1.0 to 8.0:1.0). When the component (c) is added, it is preferred that the above solution is added so that a weight ratio of the component (a) to the component (b) existing in the above solution becomes within a range from 4.0:1.0 to 20.0:1.0 (more preferably from 6.0:1.0 to 14.0: 1.0).

When the component (c) is added, it is preferred that a weight ratio of the component (b) to the component (c) is adjusted from 1.0:0.1 to 1.0:5.0 (more preferably from 1.0:0.5 to 1.0:4.0). Furthermore, when the component (c) is added, it is preferred that the total weight of the components (b) and (c) does not exceed 1/2 of the weight of the component (a).

When the above solution contains only the component (b) or (c) and simultaneously contains the components (b) and (c), it is preferred that the concentration is high and is 90% by weight or more of the saturated concentration.

When the component (c) is added, it is more preferred that a solution containing both the components (b) and (c) is used from the viewpoint of uniform mixing of the components (b) and (c) and simplification of the step.

Commonly, since the plant-derived material in the form of small pieces is not easily cured as compared with a powdered plant-derived material, it is preferred to use the components (b) and (c) in combination as compared with the case of using the component (b) alone.

However, when a plant containing sucrose in advance (for example, bagasse) is used as the plant-derived material, a formed body having excellent physical properties can be obtained even when the component (b) is used alone.

The method of properly adding a polycarboxylic acid (b) and/or a saccharide (c) in a state of a solution to a plant-derived material (a) in the form of small pieces includes a method of spraying the above solution to the plant-derived material.

When a formed body such as a particleboard is produced by the present invention, applying heat/pressure are commonly carried out by upper and lower press using hot plates (heating platen). Usually, since the thickness of the particleboard is controlled using a distance bar (a thickness regulating jig for regulating a distance between upper and lower hot plates), a set pressure of a press machine does not agree with a pressure applied actually to a plant-derived material. Therefore, the set pressure may be adjusted to the pressure, which enables sufficient compression of the plant-derived material, or more. Specifically, the pressure may be a pressure (4 MPa to 7 MPa [about 40 to 70 kgf/cm²]) which is nearly the same as that in the production of a particleboard by a conventional method, and may be appropriately adjusted by a target density etc. of a board to be formed, similarly to the conventional method. Similar to the above, the temperature upon hot plate press is preferably from 160°C to 250°C, and more preferably from 180°C to 220°C.

The present invention will be described in more detail by way of Examples.

### [Example 1]

Using a commercially available acacia bark powder as a plant-derived material and a citric acid powder (sales origin: Nacalai Tesque, Inc.) as a polycarboxylic acid, a powdered composition was prepared. The above acacia bark powder (product name: Koshitite P, sales origin: Koshii Wood Solutions Co., Ltd.) had the composition consisting of 30.0% by weight of tannin, 44.7% by weight of lignin, 20.3% by weight of holocellulose and 5.0% by weight of ash, and the powder had a particle size of 100 mesh pass.

The citric acid powder was ground using a mortar and a pestle until the particle size becomes nearly the same particle size as that of the acacia bark powder. The citric acid powder and the acacia bark powder were weighed as shown in Table 1 and uniformly mixed to prepare a composition.

The composition thus prepared was filled in a circular die (measuring 7 cm in inner diameter and 3 cm in height) and then applied heat/pressue at the temperature under the pressure shown in the table using a hot press to obtain a molding. The results are shown in Table 1. When the amount of the acacia bark powder relative to that of the citric acid powder is too large, there was a tendency that the degree of curing is insufficient. Samples having the contents of citric acid of 33.3% by weight and 50% by weight were cured most easily, and thus a black plastic-like molding was obtained.

**[Table 1] Change in content of citric acid**

| Sample No. | Plant-derived material/acid powder | Content of citric acid | Temperature | Pressure | Time for applying heat/pressure | State |
|---|---|---|---|---|---|---|
| | | (wt%) | (°C) | (kgf/cm²) | | |
| 1 | Acacia bark powder/citric acid | 10 | 160 | 40 | 10 minutes | Not cured |
| | 10 g/1.1 g | | | | | |
| 2 | Acacia bark powder/citric acid | 30 | 160 | 40 | 10 minutes | Incompletely cured |
| | 10 g/4.286 g | | | | | |
| 3 | Acacia bark powder/citric acid | 33.3 | 160 | 40 | 10 minutes | Cured |
| | 10 g/5 g | | | | | |
| 4 | Acacia bark powder/citric acid | 50 | 160 | 40 | 10 minutes | Cured |
| | 6 g/6 g | | | | | |
| 5 | Acacia bark powder/citric acid | 70 | 160 | 40 | 10 minutes | Impossibly to mold because of drastic flow |
| | 2.5 g/5.83 g | | | | | |

### [Example 2]

In the same manner as in Example, 1, powdered compositions (samples 6 to 8) of an acacia bark powder and a citric acid powder in a ratio of 2:1 were prepared and moldings were produced by varying a heating temperature. The results are shown in Table 2. The molding obtained by applying heat/pressure an acacia bark powder and a citric acid powder for 10 minutes was not cured at 140°C, but was cured at 160°C. Provided that it was difficult to retain its shape when the obtained cured body is allowed to stand in hot water. The composition was completely cured at a heating temperature of 200°C and nearly retained its shape even when it was allowed to stand in hot water and ethanol. As is apparent from the results, the required heating temperature is at least 160°C, and preferably 200°C. The molding obtained from a sample 8 was black and had a thickness of about 3 mm, a weight of about 13 gram and a density of about 1.1 g/cm³, and the molding was rigid.

**[Table 2] Change in temperature**

| Sample No. | Plant-derived material/acid powder | Weight ratio | Temperature | Pressure | Time for applying heat /pressure | State |
|---|---|---|---|---|---|---|
| | | Plant-derived material: citric acid | (°C) | (kgf/cm²) | | |
| 6 | Acacia bark powder/citric acid | 2:1 | 140 | 40 | 10 minutes | Not cured |
| | 10 g/5 g | | | | | |
| 7 | Acacia bark powder/citric acid | 2:1 | 160 | 40 | 10 minutes | Cured body is decayed by immersing in hot water |
| | 10 g/5 g | | | | | |
| 8 | Acacia bark powder/citric acid | 2:1 | 200 | 40 | 10 minutes | Cured body is not decayed in hot water and ethanol |
| | 10g/5g | | | | | |

### [Example 3]

In the same manner as in Example 1, a powdered composition of an acacia bark powder and an itaconic acid powder in a ratio of 2:1 was prepared and moldings were produced by varying a heating temperature. The results are shown in Table 3. When the heating temperature is 140°C, the molding was not completely cured even by applying heat/pressure for 10 minutes. When the heating temperature is 160°C, the molding was cured. The heating temperature was more suitably 200°C.

**[Table 3] Change in temperature in the case of acacia bark powder and itaconic acid**

| Sample No. | Plant-derived material/acid powder | Weight ratio | Temperature | Pressure | Time for applying heat /pressure | State |
|---|---|---|---|---|---|---|
| | | Plant-derived material: itaconic acid | (°C) | (kgf/cm²) | | |
| 9 | Acacia bark powder/ itaconic acid | 2:1 | 140 | 40 | 10 minutes | Not cured |
| | 10 g/5 g | | | | | |
| 10 | Acacia bark powder/ itaconic acid | 2:1 | 160 | 40 | 10 minutes | Cured |
| | 10 g/5 g | | | | | |
| 11 | Acacia bark powder/ itaconic acid | 2:1 | 200 | 40 | 10 minutes | Cured |
| | 10 g/5 g | | | | | |

### [Example 4]

Using a differential scanning calorimeter (DSC2910, manufactured by TA Instruments Inc.), thermal analysis of a mixture of an acacia bark powder and a citric acid powder (weight ratio: 2:1) was carried out. The obtained chart is shown in Fig. 1. As shown in the chart, strong endothermic peaks are observed at about 150°C and about 198°C. It is considered that the peak at about 150°C is a peak attributed mainly to fusion of citric acid. On the other hand, it is considered that the peak at about 198°C is a peak attributed to the reaction of the mixture. Therefore, it is apparent that the heating temperature of the mixture of the acacia bark powder and the citric acid powder is suitably about 198°C.

### [Example 5]

In the same manner as in Example 1, except that a wood fiber (fiber measuring 1 mm or less in length and 0.2 mm or less in thickness [maximum diameter]) which is used as a raw material of a fiber board, or a wood particle for particleboard (small pieces measuring about 10 mm in maximum length and about 0.1 to 0.8 mm in thickness) was used in place of the acacia bark powder, moldings were produced- The results are shown in Table 4. As is apparent from this test, a wood fiber or a wood particle can be molded similarly to the acacia bark powder.

**[Table 4] Change in plant-derived material**

| Sample No. | Plant-derived material/acid powder | Weight ratio | Temperature | Pressure | Time for applying heat /pressure | State |
|---|---|---|---|---|---|---|
| | | Plant-derived material : citric acid | (°C) | (kgf/cm²) | | |
| 12 | Wood fiber /citric acid | 2:1 | 200 | 40 | 10 minutes | Shape is retained even when immersed in hot water for 2 hours |
| | 3 g/1.5 g | | | | | |
| 13 | Wood particle /citric acid | 2:1 | 200 | 40 | 10 minutes | Shape is retained even when immersed in hot water for 4 hours |
| | 10 g/5 g | | | | | |

### [Example 6]

Using the molding (sample No. 3) produced in Example 1, antibacterial activity against Escherichia coli was tested. A test was carried out in accordance with the test specified in JIS Z-2801. As a result, the number of organisms on a film used as a control was 1.6 × 10⁵, whereas, the number of organisms on the molding according to the present invention was 0. This proved that the molding made of the composition of Example 1 has high antibacterial activity. It is considered that this antibacterial activity is derived from tannin in the acacia bark powder.

### [Example 7]

Using the composition according to the present invention, woods were bonded with each other. Using a lauan veneer sheet (measuring 30 × 30 × 0.16 cm), a 3 ply plywood was produced by using a mixture (weight ratio 2:1) of an acacia bark powder and a citric acid powder as an adhesive- The mixture serving as the adhesive was uniformly sprayed on the veneer sheet using a 24 mesh sieve. The coating amount per one adhesive layer was set to two kinds of coating amounts, i.e. 70 g/m² and 100 g/m². Hot press conditions were as follows: a pressing pressure of 10 kgf/cm², a pressing temperature of 200°C and a pressing time of 5 minutes. A tensile shear test under normal conditions was carried out in accordance with the test method specified in JISK5851. As a result, a shear force was 0.49 MPa at the coating amount of 70 g/m², while the shear force was 0.63 MPa at the coating amount of 100 g/m². Therefore, adhesion properties of the mixture were recognized.

### [Example 8]

Plural compositions of an acacia bark powder (100 mesh pass) and a citric acid powder (60 mesh pass) in a different mixing ratio were prepared and then hot-pressed (at 200°C under 4 MPa [40.8 kgf/cm²] for 10 minutes) to produce moldings. The obtained moldings were subjected to a bending test and a water resistant test.

Using a rectangular molding measuring 80 mm × 10 mm (thickness: 2 to 4 mm) as a specimen for the bending test (bending test under normal conditions), and a bending strength (MOR) and a Young's modulus in bending (MOE) were measured by carrying out a three-point bending test at a span of 50 mm and a cross head speed of 5 mm/min. Three specimens were used per one condition.

Using a circular molding (thickness: 2 to 4 mm) having a diameter of 70 mm as a specimen for a water resistant test, the circular molding was immersed in water at 100°C for 4 hours, dried at 60°C for 20 hours, immersed again in water at 100°C for 4 hours and then vacuum-dried. After measuring the weight and the thickness, changes in the weight and the thickness were determined.

Three specimens were used per one condition.

The results are shown in Table 5 and Table 6.

**[Table 5] Bending test under normal conditions**

| Condition for applying heat/pressure (at 200°C under 4 MPa [40.8 kgf/cm²] for 10 minutes) | | | | | | |
|---|---|---|---|---|---|---|
| Acasia bark powder/citric acid powder | Weight ratio | Content of citric acid | Bending strength | Young's modulus in bending | Specific strength | Density |
| | Acasia /citric acid | (wt%) | (MPa) | (GPa) | [MPa/ (g/cm³)] | (g/cm³) |
| 10.0 g/0.00 g | - | 0 | 2.02 | 0.62 | 2.270 | 0.89 |
| 8.89/1.11 g | 8:1 | 11.1 | 9.3 | 1.78 | 8.516 | 1.092 |
| 8.00 g/2.00 g | 4:1 | 20 | 23.12 | 5.8 | 18.084 | 1.279 |
| 6.67 g/3.33 g | 2:1 | 33.3 | 23.03 | 4.32 | 19.530 | 1.179 |
| 6.00 g/4.00 g | 1.5:1 | 40 | 23.83 | 5.09 | 20.274 | 1.175 |

**[Table 6] Water resistant test**

| Condition for applying heat/pressure (at 200°C under 4 MPa [40.8 kgf/cm²] for 10 minutes) | | | | |
|---|---|---|---|---|
| Acacia bark powder/citric acid powder | Weight ratio | Content of citric acid | Change in weight | Change in thickness |
| | Acasia /citric acid | (wt%) | (%) | (%) |
| 10.0 g/0.00 g | - | 0 | Decomposition | Decomposition |
| 10.0/1.25 g | 8:1 | 11.1 | -33.06 | 13.7 |
| 10.0 g/2.50 g | 4:1 | 20 | -23.5 | -3.2 |
| 10.0 g/5.00 g | 2:1 | 33.3 | -33.7 | -10.3 |
| 10.0 g/6.67 g | 1.5:1 | 40 | -39 | Unmeasurable |

As shown in Table 5, a remarkable improvement in strength was recognized when the content of citric acid is 20% by weight or more. The obtained molding has a configuration of wood-plastic combination (WPC). In a molding in which the content of citric acid is 20% by weight or more, the strength more than a standard (bending strength [MOR]: 20 MPa) specified in JIS standard (JIS A 5741:wood-plastic regenerated composite) of WPC was obtained. As shown in Table 6, also in the water resistant test, excellent water resistance was recognized when the content of citric acid is 20% by weight.

### [Example 9]

Plural compositions of an acacia wood flour (60 mesh pass) and a citric acid powder (60 mesh pass) in a different mixing ratio were prepared and then hot-pressed (at 200°C under 4 MPa for 10 minutes) to produce moldings. The obtained moldings were subjected to the same bending test as in Example 8. The results are shown in Table 7. As shown in Table 7, also in this case, the bending strength was more than 20 MPa when the content of citric acid is 20% by weight or more.

Furthermore, the composition of an acacia wood flour and a citric acid powder in a ratio of 4:1 (content of citric acid: 20% by weight) was prepared and moldings were produced by varying the temperature (molding temperature) during applying heat/pressure within a range from 140 to 200°C. The obtained moldings were subjected to the same test. The results are shown in Table 8. A remarkable improvement in the strength was recognized at the molding temperature of 180°C or higher, and best results were obtained at 200°C.

**[Table 7] Bending test under normal conditions**

| Condition for applying heat/pressure (at 200°C under 4 MPa [40.8 kgf/cm²] for 10 minutes) | | | | |
|---|---|---|---|---|
| acacia wood flour /citric acid powder | Weight ratio | Content of citric acid | Bending strength | Young's modulus in bending |
| | Acacia /citric acid | (wt%) | (MPa) | (GPa) |
| 10.0 g/0.00 g | - | 0 | 1.2 | 0.27 |
| 8.89/1.11 g | 8:1 | 11.1 | 14.24 | 2.22 |
| 8.00 g/2.00 g | 4:1 | 20 | 32.02 | 5.1 |
| 6.67 g/3.33 g | 2:1 | 33.3 | 27.74 | 5.92 |
| 6.00 g/4.00 g | 1.5:1 | 40 | 23.86 | 4.93 |

**[Table 8] Change in temperature in the case of acacia wood flour and citric acid**

| Condition for applying heat/pressure (4 MPa [40.8 kgf/cm²] for 10 minutes) | | | |
|---|---|---|---|
| acacia wood flour /citric acid powder | Temperature | Bending strength | Young's modulus in bending |
| | (°C) | (MPa) | (GPa) |
| 8.00 g/2.00 g Weight ratio 4:1 Content of citric acid 20wt% | 140 | 0.34 | 0.08 |
| | 160 | 2.67 | 0.72 |
| | 180 | 26.95 | 4.11 |
| | 200 | 32.02 | 5.1 |

As is apparent from observation through Examples and other tests, there is a possibility of curing by controlling conditions (time for applying heat/pressure, pressure, temperature, etc.) when a weight ratio of a plant-derived material to a polycarboxylic acid in the composition is within a range from 0.7 to 9.5:1.0. The weight ratio of a plant-derived material to a polycarboxylic acid in the composition, which enables easier curing, is within a range from 1.0 to 8.0:1.0.

In order to produce a molding having excellent bending strength and water resistance using a powdery polycarboxylic acid, the weight ratio of a plant-derived material to a polycarboxylic acid powder was preferably adjusted within a range from 1.0 to 5.0:1.0, and more preferably from 1.5 to 4.0:1.0.

### [Example 10]

A mechanism of curing of the composition according to the present invention was studied. The bark of acacia (A. mangiumu) contains a large amount of tannin. Tannin has remarkable reactivity and is also used in an adhesive. Therefore, it is considered that there is a possibility of curing by some chemical reaction between tannin and the polycarboxylic acid during applying heat/pressure. In order to study an influence of tannin, tannin was separation and extracted, and then the reaction of the extracted tannin or the residue with citric acid was examined.

First, 100 g of an acacia bark powder was added to 1,000 ml of 70% acetone, followed by stirring for 48 hours, thereby eluting tannin in the acacia bark in acetone. After filtration, the filtrate (tannin extraction liquid) was concentrated under reduced pressure and then freeze-dried to obtain a powder of tannin. The yield of tannin was 38.2%. On the other hand, the residue on the filter paper was washed and then dried.

The thus obtained extracted tannin (10 g) or the extracted residue (10 g) was mixed with citric acid (5 g) and the mixture was filled in a circular die (measuring 7 cm in inner diameter and 3 cm in height) and a trial of producing a molding was made by hot-pressing (at 200°C under 4 MPa for 10 minutes).

As a result, even when the mixture of the extracted tannin and the citric acid powder is applied heat/pressure, a molding could not be obtained because of drastic flow. On the other hand, when the mixture of the extracted residue powder and the citric acid powder is applied heat/pressure, a plastic-like molding was obtained similar to the case of using the mixture of the acacia bark powder and the citric acid powder.

Furthermore, using a composition consisting of an extracted residue powder and a citric acid powder (weight ratio: 2:1), specimens were produced in the same manner as in Example 8 and then a bending test and a water resistant test were carried out in the same manner. As a result, the molding using the residue showed the strength which is nearly the same as that of molding (acacia bark: citric acid = 2:1) using the acacia bark powder.

As is apparent from the results of this Example, citric acid reacts with a component other than tannin.

Furthermore, spectra of a molding produced from only an extracted residue and a molding produced from an extracted residue and citric acid were measured by a KBr method using a Fourier transform infrared spectrophotometer (FT-IR). The measurement was carried out after subjecting the molding to a boiling treatment so as to eliminate a peak attributed to the unreacted raw material. As a result of a comparison between spectra, an increase in carbonyl groups and a decrease in hydroxyl groups were recognized. As is apparent from the results, it is considered that an ester is formed and there is a possibility of curing by an esterification reaction between citric acid and a saccharide component in the acacia bark.

### [Example 11]

In light of the results of Example 10, a test was carried out taking notice of saccharides as an additive for acceleration of curing.

Using a filter paper powder as a plant-derived material and a citric acid powder as a polycarboxylic acid, a trial of producing a molding was made by adding a monosaccharide, a disaccharide or a polysaccharide shown in the table below.

First, 10 g of a filter paper powder (100 to 200 mesh), 2.5 g of a citric acid powder (60 mesh pass) and 5 g of a saccharide powder were mixed to prepare a composition- The obtained composition was filled in a circular die (measuring 7 cm in inner diameter and 3 cm in thickness) and then hot-pressed (at 200°C under 4MPa for 10 minutes).

As a result, a plastic-like molding could be produced in any case. Next, in order to examine water resistance of the molding, the molding was immersed in boiled water for 4 hours. The results are shown in Table 9. As shown in Table 9, the moldings obtained by adding xylose, sucrose and dextrin showed particularly excellent properties. When a molding was produced from only a filter paper powder and a citric acid powder (weight ratio: 4:1), the molding showed drastically poor water resistance. As is apparent from the results of this Example, saccharide is effective as an additive for acceleration of curing, and sucrose, xylose and dextrin are particularly effective.

**[Table 9] Water resistant test of molding containing saccharide added therein condition for applying heat/pressure (at 200°C under 4 MPa [40.8 kgf/cm²] for 10 minutes)**

| Composition: 10 g of filter paper powder /2.5 g of citric acid powder/5 g of saccharide powder (Weight ratio 4:1:2) | |
|---|---|
| Saccharide used | State after immersing in boiled water for 4 hours |
| Xylose (Monosaccharide) | Shape is retained |
| Mannose (Monosaccharide) | Shape is retained (Brittle) |
| Galactose (Monosaccharide) | Shape is retained (Drastically brittle) |
| Glucose (Monosaccharide) | Decayed |
| Sucrose (Disaccharide) | Shape is retained |
| Cellobiose (Disaccharide) | Decayed |
| Lactose (Disaccharide) | Decayed |
| Dextrin (Polysaccharide) | Shape is retained |

### [Example 12]

While hot press was carried out using a die in Examples described above, a trial of producing a formed body was made by hot plate press without using a die in the present Example. At present, in the production of a particleboard, small pieces of wood sprayed with a synthetic resin adhesive are formed, placed on a press stand and then subjected to upper and lower press to produce the particleboard. It is considered to be very useful that a particleboard containing no toxic substance such as formaldehyde can be produced if a particleboard can be produced by using a polycarboxylic acid in place of a synthetic resin adhesive. It is possible to uniformly distribute the polycarboxylic acid in wood particles by dissolving the polycarboxylic acid in a solvent and spraying the obtained solution, and to produce the particleboard using the very same facility used in the production of a conventional particleboard.

First, a solution was sprayed on dry wood particles (raw material is a recycled material: particles measuring about 0.3 to 0.8 mm in thickness, about 1 to 30 mm in width and about 5 to 30 mm in length were used) and a mat was formed by a forming box measuring 30 by 30 cm, and then subjected to hot plate press at a temperature of 200°C for 10 minutes. In the case of pressing, the thickness was controlled using a distance bar of 0.9 cm and a pressure of a press machine was set to 5 MPa [51 kgf/cm²]. A target board dimension measures 30 cm × 30 cm × 0.9 cm, and a target density is 0.8 g/cm³.

As the solution, a solution prepared by dissolving citric acid in about saturated concentration (59% by weight) was sprayed so that it is added in the solid content of 20% based on the weight of entirely dried particles (test 1). Namely, a weight ratio of wood particles to citric acid is 5:1. The obtained particleboard was a board having comparatively low physical properties, for example, a bending strength of 14.67 MPa, a Young's modulus in bending of 4.28 GPa, and water absorption and thickness swelling for 24 hours of 30.58%.

Next, a solution containing saccharide added therein was tested. As the solution, a mixed solution (concentration: 59% by weight) prepared by mixing citric acid and sucrose (weight ratio: 1:1) in water was used. This solution was sprayed so that it is added in the solid content of 20% based on dry wood particles (test 2). Namely, a weight ratio of wood particles:citric acid:sucrose is 10:1:1. Next, hot press was carried out under the above conditions, and thus a board could be produced. Regarding this board, a bending strength, a Young's modulus in bending, and water absorption and thickness swelling for 24 hours were measured in accordance with the methods specified in JISA5908.

The bending strength was 19.9 MPa, the Young's modulus in bending was 4.26 GPa, and the water absorption and thickness swelling for 24 hours was 24.78%. The results could reveal that the addition of saccharide contributes to an improvement in physical properties.

The results are summarized in Table 10.

**[Table 10] Production of particleboard**

| | | | Test 1 | Test 2 |
|---|---|---|---|---|
| Production conditions | Spray solution | Concentration (% by weight) | 59 | 59 |
| | | Citric acid/Sucrose | 100/0 | 50/50 |
| | Entirely dried particle: Citric acid: Sucrose (Weight ratio) | | 10:2:0 | 10:1:1 |
| Physical properties | Bending strength (MPa) | | 14.67 | 19.9 |
| | Young's modulus in bending (GPa) | | 4.28 | 4.26 |
| | Water absorption and thickness swelling for 24 hours (%) | | 30.58 | 24.78 |

As is apparent from observation through Examples and other tests, when a saccharide is added, a weight ratio of a polycarboxylic acid to a saccharide was preferably within a range of about 1.0:0.1-5.0, and particularly about 1.0:0.5-4.0 (more preferably about 1.0:0.5-3.0).

When a polycarboxylic acid is added in the form of a solution and a saccharide is not added to a plant-derived material, it became apparent that there is a possibility of curing by controlling conditions (time for applying heat/pressure, pressure, temperature, etc.) if the weight ratio of a plant-derived material to a polycarboxylic acid is adjusted within a range from 2.0 to 15.0:1.0. In particular, a composition comprising a plant-derived material and a polycarboxylic acid can be easily cured if a weight ratio of the plant-derived material to the polycarboxylic acid is within a range from 2.0 to 10.0:1.0 (and more preferably from 4.0 to 8.0:1.0). When a saccharide is added, it became apparent that there is a possibility of curing by controlling conditions (time for applying heat/pressure, pressure, temperature, etc.) if the weight ratio of a plant-derived material to a polycarboxylic acid is adjusted within a range from 4.0 to 20.0:1.0. In particular, a composition comprising a plant-derived material, a polycarboxylic acid and a saccharide can be easily cured if a weight ratio of the plant-derived material to the polycarboxylic acid is within a range from 6.0 to 14.0:1.0 (and more preferably from 8.0 to 12.0:1.0).

When wood particles are used as the plant-derived material, a board having sufficient physical properties could not be produced only by using a polycarboxylic acid. However, when those containing a monosaccharide or an oligosaccharide in advance, like bagasse (squeezed residue of sugarcane), are used, it is considered that a board having excellent physical properties can be produced by using only a polycarboxylic acid or adding a smaller amount of saccharide. Since bagasse is agricultural residue, its effective utilization method has hitherto been groped. Although a trial of producing a board by a hot process method using bagasse is made, sufficient physical properties cannot be obtained only by using bagasse, and it is reported that poor adhesion arise even when an adhesive is used. This reason is considered that curing of an adhesive (formaldehyde-based) is suppressed by sucrose remaining in bagasse. In the present invention, it is considered that remaining saccharide accelerate curing to the contrary. Therefore, it is possible to effectively utilize even a raw material which was considered to be difficult to be cured by a hot press method, like bagasse. It is also considered that grass containing a larger amount of a saccharide component than that of wood, such as kenaf, is suited for curing. Therefore, according to the present invention, agricultural residues such as bagasse and kenaf can be recycled as a woody board, and also it is not necessary to use a formaldehyde-based adhesive. Therefore, it is considered that the high safety is achieved, thus contributing to effective utilization of an agricultural residue.

### [INDUSTRIAL APPLICABILITY]

According to the present invention, it is possible to obtain a plastic-like formed body and a woody formed body by a very simple step using a material which is easily available and inexpensive, without using a fossil product. Since it is considered that its waste has also biodegradability, it can be utilized as an environmentally friendly biomass material. When an acacia bark powder is used, it is considered to be suited in tray for foods since it has antimicrobial activity.

## Claims

1. A composition cured by applying heat/pressure thereto, comprising
(a) a plant-derived material in the form of powder or small pieces, and
(b) a polycarboxylic acid, and
(c) a saccharide as main components,
wherein the plant-derived material is selected from material obtained from xylem, bark, seeds and leaves of trees and plants,
and wherein the saccharide is selected from xylose, sucrose and dextrin.

2. The composition according to claim 1, wherein the polycarboxylic acid is in the form of a powder, and a weight ratio of the component (a) to the component (b) is 0.7-4.0:1.0.

3. The composition according to claim 1 or 2, wherein weight ratio of the component (b) to the component (c) is 1.0:0.1-5.0.

4. The composition according to claim 1, 2 or 3, wherein the saccharide is selected from the group consisting of sucrose, xylose and dextrin.

5. The composition according to any one of claims 1 to 4, wherein the polycarboxylic acid is citric acid and/or itaconic acid.

6. Use of the composition according to any one of claims 1 to 5 for production of a molding.

7. Use of the composition according to any one of claims 1 to 5 for adhesion of wood.

8. A formed body obtained by applying heat/pressure the composition according to any one of claims 1 to 5.

9. A method for producing a molding, which comprises charging the composition according to any one of claims 1 to 5 in a die, applying heat to the composition to a temperature within a range from 160°C to 250°C, and applying pressure to the composition to a pressure within a range from 5 kgf/cm² to 70 kgf/cm².

10. A method for producing a formed body, which comprises the step of adding a polycarboxylic acid (b) in the form of a solution and further comprises adding a saccharide (c) in the form of a solution to a plant-derived material (a) in the form of small pieces, followed by applying heat/pressure,
wherein the plant-derived material is selected from material obtained from xylem, bark, seeds and leaves of trees and plants,
and wherein the saccharide is selected from xylose, sucrose and dextrin.

11. The method according to claim 10, wherein a mixed solution of the components (b) and (c) is added.

## Patentansprüche

1. Eine Zusammensetzung, die durch Anwendung von Wärme/Druck gehärtet wird, umfassend
(a) ein Material pflanzlichen Ursprungs in Form eines Pulvers oder kleiner Stücke und
(b) eine Polycarbonsäure und
(c) ein Saccharid als Hauptkomponenten,
wobei das Material pflanzlichen Ursprungs ausgewählt ist aus Material, das aus Xylem, Rinde, Samen und Blättern von Bäumen und Pflanzen erhalten wird,
und wobei das Saccharid ausgewählt ist aus Xylose, Saccharose und Dextrin.

2. Die Zusammensetzung gemäß Anspruch 1, wobei die Polycarbonsäure in Form eines Pulvers vorliegt und ein Gewichtsverhältnis von Komponente (a) zu Komponente (b) 0,7-4,0:1,0 beträgt.

3. Die Zusammensetzung gemäß Anspruch 1 oder 2, wobei das Gewichtsverhältnis von Komponente (b) zu Komponente (c) 1,0:0,1-5,0 beträgt.

4. Die Zusammensetzung gemäß Anspruch 1, 2 oder 3, wobei das Saccharid ausgewählt ist aus der Gruppe, bestehend aus Saccharose, Xylose und Dextrin.

5. Die Zusammensetzung gemäß einem der Ansprüche 1 bis 4, wobei die Polycarbonsäure Citronensäure und/oder Itaconsäure ist.

6. Verwendung der Zusammensetzung gemäß einem der Ansprüche 1 bis 5 zur Herstellung eines Formteils.

7. Verwendung der Zusammensetzung gemäß einem der Ansprüche 1 bis 5 zur Verklebung von Holz.

8. Ein Formkörper, erhalten durch Anwendung von Wärme/Druck auf die Zusammensetzung gemäß einem der Ansprüche 1 bis 5.

9. Ein Verfahren zur Herstellung eines Formteils, umfassend das Beschicken einer Pressform mit der Zusammensetzung gemäß einem der Ansprüche 1 bis 5, das Erwärmen der Zusammensetzung auf eine Temperatur im Bereich von 160°C bis 250°C, und das Anwenden eines Drucks im Bereich von 5 kgf/cm² bis 70 kgf/cm² auf die Zusammensetzung.

10. Ein Verfahren zur Herstellung eines Formkörpers, umfassend den Schritt des Zugebens einer Polycarbonsäure (b) in Form einer Lösung, und ferner umfassend das Zugeben eines Saccharids (c) in Form einer Lösung zu einem Material pflanzlichen Ursprungs (a) in Form kleiner Stücke, gefolgt von der Anwendung von Wärme/Druck,
wobei das Material pflanzlichen Ursprungs ausgewählt ist aus Material, das aus Xylem, Rinde, Samen und Blättern von Bäumen und Pflanzen erhalten wird,
und wobei das Saccharid ausgewählt ist aus Xylose, Saccharose und Dextrin.

11. Das Verfahren gemäß Anspruch 10, wobei eine gemischte Lösung aus den Komponenten (b) und (c) zugegeben wird.

## Revendications

1. Composition vulcanisée par l'application d'une chaleur/pression sur celle-ci, comprenant
(a) un matériau d'origine végétale sous la forme d'une poudre ou de petits fragments et
(b) un acide polycarboxylique et
(c) un saccharide en tant que composants principaux,
dans laquelle le matériau d'origine végétale est sélectionné parmi des matériaux obtenus à partir du xylème, de l'écorce, des graines et des feuilles d'arbres et de plantes,
et dans laquelle le saccharide est sélectionné parmi le xylose, le sucrose et la dextrine.

2. Composition selon la revendication 1, dans laquelle l'acide polycarboxylique est sous la forme d'une poudre et dans laquelle un rapport en poids entre le composant (a) et le composant (b) est de 0,7 - 4,0:1,0.

3. Composition selon la revendication 1 ou 2, dans laquelle un rapport en poids entre le composant (b) et le composant (c) est de 1,0:0,1 - 5,0.

4. Composition selon la revendication 1, 2 ou 3, dans laquelle le saccharide est sélectionné dans le groupe consistant en le sucrose, le xylose et la dextrine.

5. Composition selon l'une quelconque des revendications 1 à 4, dans laquelle l'acide polycarboxylique est l'acide citrique et/ou l'acide itaconique.

6. Utilisation de la composition selon l'une quelconque des revendications 1 à 5 pour la production d'un moulage.

7. Utilisation de la composition selon l'une quelconque des revendications 1 à 5 pour l'adhésion d'un bois.

8. Corps façonné obtenu par l'application d'une chaleur/pression sur la composition selon l'une quelconque des revendications 1 à 5.

9. Procédé de production d'un moulage, qui comprend le chargement de la composition selon l'une quelconque des revendications 1 à 5 dans un moule, l'application de chaleur à la composition à une température dans une plage de 160 °C à 250 °C et l'application d'une pression à la composition dans une plage de 5 kgf/cm² à 70 kgf/cm².

10. Procédé de production d'un corps façonné, qui comprend l'étape d'addition d'un acide polycarboxylique (b) sous la forme d'une solution et qui comprend en outre l'addition d'un saccharide (c) sous la forme d'une solution à un matériau d'origine végétale (a) sous forme de petits fragments, puis l'application d'une chaleur/pression,
dans lequel le matériau d'origine végétale est sélectionné parmi des matériaux obtenus à partir du xylème, de l'écorce, des graines et des feuilles d'arbres et de plantes,
et dans lequel le saccharide est sélectionné parmi le xylose, le sucrose et la dextrine.

11. Procédé selon la revendication 10, dans lequel une solution mixte des composants (b) et (c) est ajoutée.
